(19) Europäisches Patentamt
European Patent Office
Office européen des brevets

(11) **EP 1 483 911 B1**

(12) **EUROPEAN PATENT SPECIFICATION**

(45) Date of publication and mention
of the grant of the patent:
**14.10.2009 Bulletin 2009/42**

(51) Int Cl.:
***H04N 7/088*** (2006.01)

(21) Application number: **03715982.9**

(86) International application number:
**PCT/US2003/003485**

(22) Date of filing: **04.02.2003**

(87) International publication number:
**WO 2003/067876 (14.08.2003 Gazette 2003/33)**

(54) **DYNAMIC HOT SPOT**

DYNAMISCHER Hot sPOT

ZONE INTERACTIVE DYNAMIQUE

(84) Designated Contracting States:
**AT BE BG CH CY CZ DE DK EE ES FI FR GB GR
HU IE IT LI LU MC NL PT SE SI SK TR**

(30) Priority: **06.02.2002 US 354745 P
31.01.2003 US 357155**

(43) Date of publication of application:
**08.12.2004 Bulletin 2004/50**

(73) Proprietor: **Intellocity USA, Inc.
Denver, CO 80202 (US)**

(72) Inventor: **MARKEL, Steven, O.
Highlands Ranch, CO 80126 (US)**

(74) Representative: **Glawe, Delfs, Moll
Patent- und Rechtsanwälte
Postfach 26 01 62
80058 München (DE)**

(56) References cited:
**EP-A- 1 021 036     US-A- 5 590 262
US-A- 5 708 845     US-A1- 2002 049 984
US-A1- 2002 056 136     US-B1- 6 229 524**

## Description

## Background

a. <u>Field</u>

The present writing pertains generally to interactive video and specifically to tracking of moving objects on video with interactive access points (hot spots).

b. <u>Description of the Background</u>

Interactive video has not gained wide acceptance for several different reasons, among them are that the user interface can be unwieldy and that the programs tend to be labor intensive to produce. The user interface currently in vogue for interactive video requires that the video be shrunk to about 2/3 of its original size, freeing up the remainder of the screen for interactive buttons and other content. The interactive content needs to be manually designed, constructed, and updated in a very labor-intensive process.

The shrunken video image takes away from the enjoyment of watching the show, and the additional interactive content is further distracting the viewer. The interactive content generally contains buttons, text, possibly advertisements, and other elements that must be updated and changed during the course of the show. In accordance with these prior methods, the viewer is subjected to viewing the large border containing the interactive content while watching the progam. Further, when new interactive content became available, the viewer can be distracted from the program. Content providers do not want to provide these distractions, nor do the viewers enjoy the distractions. As such, neither the program nor the interactive content can be enjoyed to their fullest potential.

Interactive access points (hot spots) that reside on the content of the video program alleviate the problems of the shrunken video with the L-shaped interactive content. See "System and Method for Web Based Enhanced Interactive Television Content Page Layout", application Pub. No. US 2002/0087986 A1 filed Aug. 23, 2001 by Steven O. Markel, "Creating On Content Enhancements", application Pub. No. US 2002/0126990 A1 by Gary Rasmussen, et al, filed Oct. 24, 2001, and "Post Production Visual Alterations", application Pub. No. US 2003/0028873 A1 filed Aug. 2, 2002 by Thomas Lemmons all of which are commonly assigned. The major limitation of interactive access points on a video program is that the definitions of interactive access points are static, and it is difficult to create a dynamic interactive access point that is coordinated to track a moving object in a video. Using current technology, an interactive access point definition would have to be created for each frame.

From a more efficient handling of hot spots making a linear movement along a straight line or a simple curve it is known to mark the start point of a hot spot in a first frame and the end point in a second frame, and to automatically create the location data for the hot spots of the intermediate frames (US-A-5 708 845). Each frame includes the location data of the hot spot and is stored.

Defining a hot spot for each frame of video consumes a large amount of bandwidth, as individual definitions must accompany each frame. Further, having several hot spots active on the screen simultaneously increases the bandwidth requirements even more. Also, extensive effort is required to separately place these hot spots on the correct location on each frame.

It would therefore be advantageous to provide a system and method for integrating interactive enhancement video whereby hot spots may be created to track moving objects in a manner that is not cumbersome or complex. Additionally, it would be advantageous to minimize computational power and bandwidth for the creation, distribution, and use of interactive video.

It is known from International Patent Application WO 01/18676 A1 and US patent US-A-5,727,141 to use interpolation at receiving side to automatically create the location data for the hot spots of intermediate frames.

## Summary

The present invention overcomes the disadvantages and limitations of the prior art by providing a system and method for generating dynamic interactive access point definitions that do not require substantial bandwidth. The access points (i.e., hot spots) are located on the video content, allowing the viewer a much more engaging interactive video experience. A semi-automated method may be employed to help the producer create interactive content with a minimum of effort.

The on-content hot spots allow a producer of an interactive video program to use the full screen of the video display for the program content and not be forced to shrink the very expensive program just to add the interactive content. The benefit to the producer is that the hard work and great expense that went into the production of the video is not deprecated or diminished by the interactive content.

Within this specification, reference is made to video signals, including broadcast signals. These terms shall be construed to comprise all forms of electronically stored motion pictures, such as television signals broadcast over the air, on cable or satellite distribution systems, as well as distribution channels over the internet, such as streaming media. The video signals may be distributed on stored media, such as DVD, tape, optical disks, or other such media. The signals shall further comprise formats such as MPEG, MPEG-2, NTSC, PAL, and any other form of video signal.

The present invention may therefore comprise a method for generating a dynamic hot spot for an interactive video program comprising: defining a trajectory, said trajectory having at least a start point and an end point, said start point being associated with a first frame identifier of said video program, said end point being associated with a second frame identifier of said video program, wherein said start point and said end point are separated by one or more intermediate frames, the trajectory comprises the location of the hot spot for at least said start point and said end point, and the trajectory includes parameters to define an equation for calculating the location of the hot spot for the intermediate frames; defining an action associated with said hot spot; defining attributes for said hot spot including the action associated with said hot spot; and embedding a trigger into said interactive video program comprising said trajectory, said action, and said attributes.

The present invention may further comprise a method for displaying a dynamic hot spot on a video image comprising: providing a set top box capable of receiving triggers embedded in said video image, said triggers comprising hot spots definitions; receiving a hot spot definition by said set top box, said definition comprising at least a start point and an end point which indicate a starting position and an ending position on said screen, and at least one frame identifier, wherein said start point and said end point are separated by one or more intermediate frames, said hot spot definition further comprising parameters defining an equation for a trajectory; creating a hot spot on said start point based on said hot pot definition; displaying said hot spot on said start point; determining a trajectory based on the parameters comprised in said hot spot definition; calculating using said determined trajectory intermediate positions for said hot spot for intermediate frames of said video between said start point and said end point; and displaying said hot spot on said video image for frames of said video between said start point and said end point.

The present invention may further comprise a method of creating and displaying a moving hot spot on a video signal comprising: defining a first trajectory point on a first frame of a video signal; defining at least one more trajectory point for a subsequent motion of said hot spot on said video signal on at least one subsequent frame of said video signal, said subsequent frame having at least one intermediate frame between said first frame and said subsequent frame; creating parameters to define an equation for a trajectory of said hot spot; creating a trigger comprising said parameters; transmitting said trigger to a set top box; creating said hot spot with said set top box; calculating an intermediate position of said hot spot for said at least one intermediate frame using said parameters; and displaying said hot spot on a video display.

The present invention may further comprise a system for interactive video comprising: an editing system adapted to: define a first trajectory point on a first frame of a video signal for motion of a hot spot; define at least one more trajectory point for a subsequent motion of said hot spot on said video signal on at least one subsequent frame in said video signal, said subsequent frame having at least one intermediate frame between said first frame and said subsequent frame; create parameters to define an equation for said trajectory of said hot spot; create a trigger comprising said parameters; and insert said trigger into said video signal; and, a set top box adapted to receive said trigger, create said hot spot, calculate at least one intermediate position of said hot spot for said intermediate frames using said parameters, and display said hot spot on a video display.

The advantages of the present invention are that the present invention can provide an improved interactive video experience, since the viewer may enjoy interactive content plus the underlying video show with minimal distraction. Further, since the methods of hot spot creation are inexpensive in terms of bandwidth required for transmission, a much larger body of interactive video content may be used, advancing the widespread acceptance of interactive video.

## Brief Description of the Drawings

In the drawings,

FIGURE 1 is an illustration of a video screen showing a news clip.
FIGURE 2 is an illustration of the news clip of FIG. 1 with hot spots overlaid thereupon.
FIGURES 3A, 3B, and 3C are illustrations of a moving, i.e., dynamic hot spot.
FIGURE 4 is an illustration of a block diagram of an embodiment of the present invention for creating and displaying enhanced video content that is specifically enhanced with hot spots.
FIGURE 5 is a block diagram showing an embodiment of the present invention wherein hot spots may be created manually.
FIGURE 6 is a work flow diagram of a method of creating dynamic hot spots.
FIGURE 7 represents a snippet of an exported XML file with hot spot information.
FIGURE 8 is a block diagram of a process for embedding triggers into a video signal.
FIGURE 9 is a flow diagram for a process executed by a set top box client to receive a trigger code.
FIGURE 10 is a flow diagram illustrating the process of incrementing a hot spot position.

## Detailed Description of the Invention

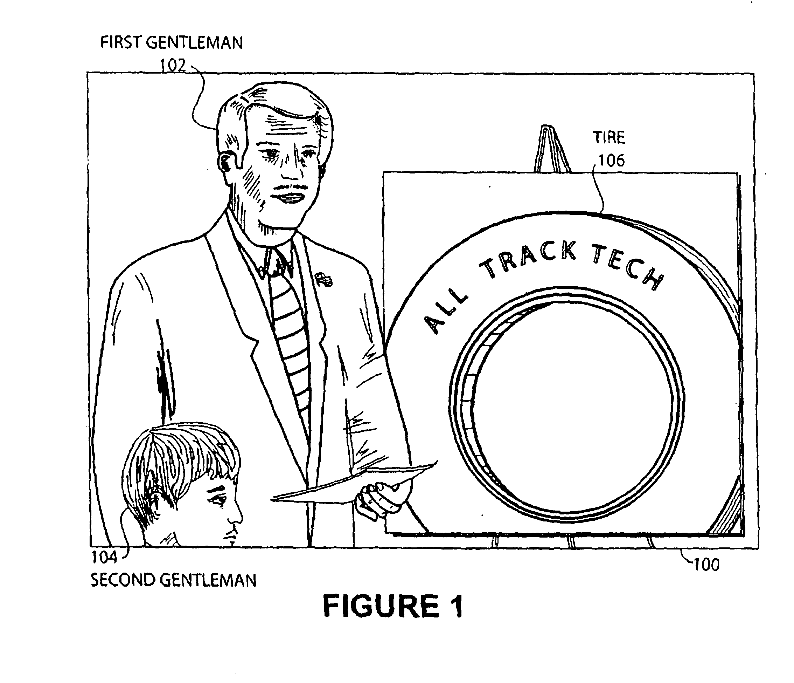

Figure 1 illustrates an unenhanced video image 100 depicting a video news clip. The news clip depicts a press conference announcing a tire recall, with one gentleman 102 speaking, a second gentleman 104 seated, and a picture of a tire 106 on an easel. The image is a news feed from a camera at a press conference and is typical of the images used in national nightly news programs.

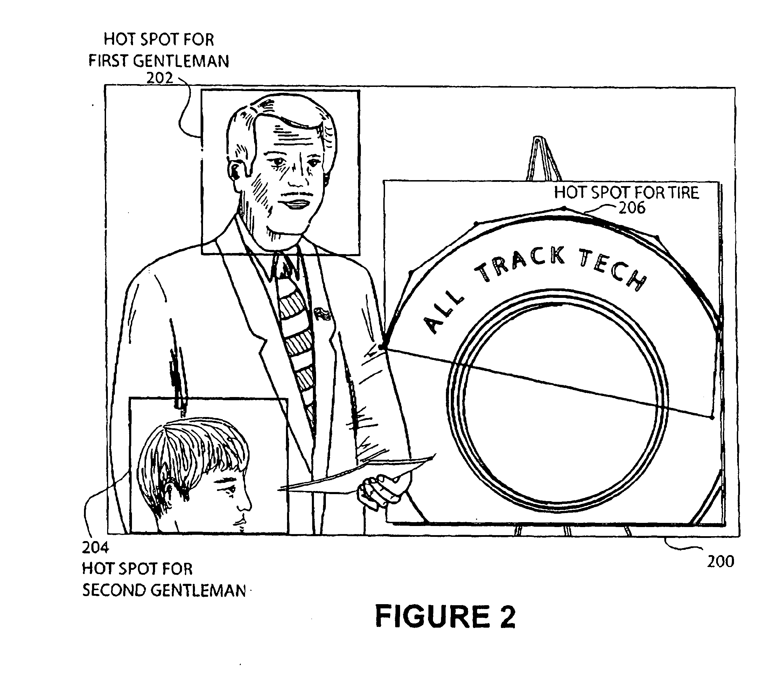

Figure 2 illustrates a video image 200, which is the image of Figure 1 with hot spots overlaid thereupon.

The gentleman speaking is defined with hot spot 202, the seated gentleman is defined by hot spot 204, and the tire is defined by hot spot 206. The hot spots 202, 204, and 206 are geometric shapes that are placed on top of the video signal. Hot spots 202 and 204 are rectangular hot spots that identify the two persons. Hot spot 206 is a hot spot defined by an eight-sided polygon. In general, a hot spot will have some action associated with it. For example, hot spot 202 may be linked to a short biography of the gentleman, so that when the viewer activates the hot spot, the gentleman's biography will be displayed.

The viewer may select a hot spot by moving a cursor over the hot spot and selecting the hot spot. The cursor may be moved with a keypad, mouse, joystick, gyroscopic pointing device, or other device adapted to move a cursor on a video screen. In one embodiment, the viewer may step from one hot spot to the next and illuminate each hot spot in succession using a single key of a remote control or keyboard. A second key may be used to select the particular hot spot to launch some interactive content. The selection of the hot spot may require the viewer press a button, issue an audible command such as clapping, speaking, or otherwise provide input to activate the hot spot.

In some embodiments, hot spots may be shaped to closely follow the contour of a particular person or object in a video presentation. Such an embodiment may be particularly useful if many hot spots were to be presented, so that the viewer may be better able to distinguish which hot spot was associated with which object on the screen.

As the object on a video program moves and changes, so may the hot spot associated with the object. For example, if a hot spot is over a beverage can, and the beverage can is picked up by and actor and raised to the actor's lips, the hot spot associated with the beverage can may also move with the can. Further, if the video zooms into the can, a hot spot associated with the can may also zoom in. The hot spot may rotate, translate, zoom, or otherwise change shape, position, or size as it tracks an object.

The movement of the hot spot on the screen draws the viewer into the program as the viewer becomes involved in the interactive aspects of the program. The viewer may watch the screen and track the object with a cursor as the viewer engages the interactive content. The viewer is focused on the object, not a button that may relate to the object that is located on the side of the screen. This is a powerful advantage for advertisers, who may be offering a product for sale as an impulse purchase. Such an advertisement may be much more effective if the purchaser does not lose focus on the product.

A moving hot spot, when visible, may be used to draw special attention to the object to which it refers. For some objects that appear small on the video screen, a highlighted hot spot that tracks the object will cause the viewer to pay attention to the object. For advertisers, any mechanism that forces attention to be drawn to the object for sale may be used to increase awareness and sales.

In embodiments where multiple hot spots are located on the same video image, the hot spots may overlap. The producer or creator of the programming may develop rules to resolve how to handle the overlapping hot spots. For example, when a hot spot that refers to an object that is in front of a second object that also has a hot spot, the hot spot of the object in front may be given priority. In other cases, the area of overlap may be divided, with one half being assigned to one hot spot and the other half of the overlapping area being assigned to the second. In other cases, the hot spot that is defined first may be assigned to the rear, and any hot spots defined later that overlap might be given priority.

During mouseOver events with overlapping hot spots, the border of the nearest hot spot may be illuminated first, then as the cursor moves off of the first hot spot and over the second, the entire border of the second hot spot may be illuminated. In this manner, the object of the second hot spot may be more apparent to the viewer.

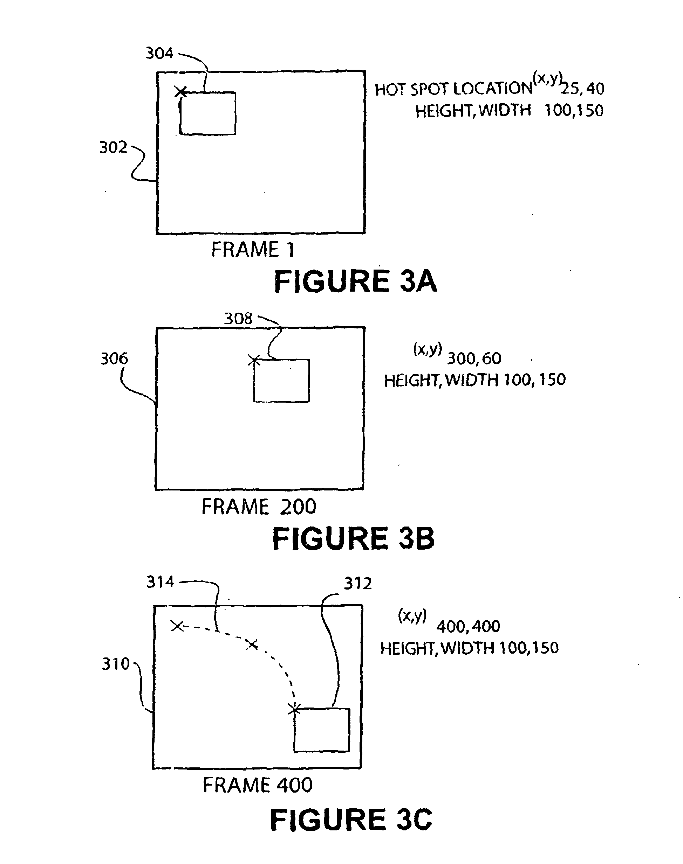

Figures 3A, 3B, and 3C are illustrations of a moving, or dynamic hot spot.

Figure 3A illustrates frame 1 of video signal 302 with a hot spot 304 located thereupon. The coordinates and size of the hot spot are given.

Figure 3B illustrates frame 200 of video signal 306 with a hot spot 308 located thereupon, with coordinates and size information.

Figure 3C illustrates frame 400 of video signal 310 with hot spot 312 located thereupon, with coordinates and size information.

During the video sequence, the hot spot is desired to follow an object through the three points and form a trajectory 314. With the definition of the three points, at the locations defined by hot spots 304, 308, and 312, the intermediate locations of the hot spots may be interpolated.

The interpolation of the trajectory of the hot spot may be done with a minimum of one point, wherein the hot spot does not move. A two-point interpolation may take the form of a linear interpolation. Using three or more points may be used to form a curve that the hot spot will follow, both in physical location and in time. In other words, both the speed and location of the hot spot may be varied as it moves across the screen. The variation of the speed and location may be defined by three or more points of a trajectory curve.

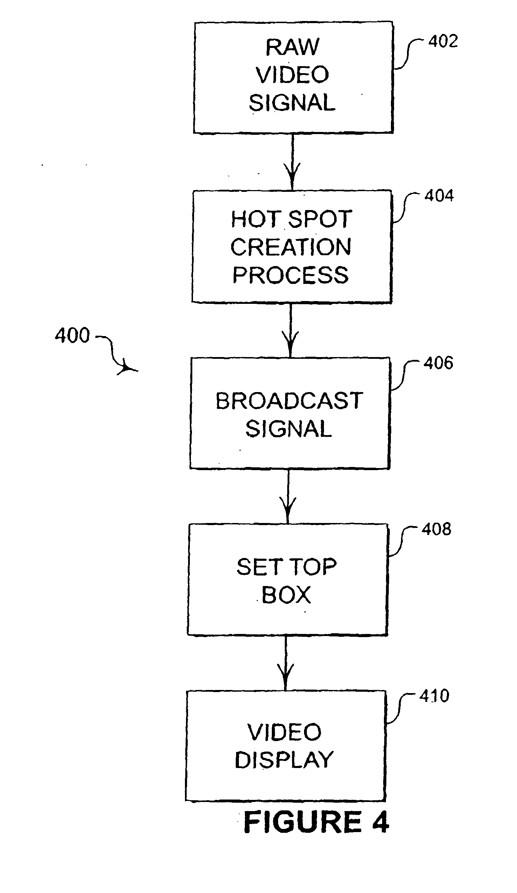

Figure 4 is a block diagram of a method 400 for creating and displaying enhanced video content, specifically enhanced video with hot spots. A raw video signal 402 has hot spots added in block 404 to create a broadcast signal 406. The broadcast signal 406 is sent to a set top box 408 that processes the enhanced video signal to be displayed on a video display 410.

The method 400 is a general method for the creation and use of enhanced video.

The raw video signal 402 may be the output from a single camera, or may be a mixed and edited video program from several cameras and/or video sources, including computer generated video. The video signal may be of any standard or format for the purposes of the present invention. In some embodiments, the video signal may come from a plurality of cameras shooting a live event, such as a sporting event. In other embodiments, the video signal may be a thirty second commercial that is pre-recorded, mixed, and edited. In still other embodiments, the video signal may be a half hour situation comedy show that is also pre-recorded.

The hot spot creation process 404 is the method that the hot spots are created and added to the raw video signal. A broadcast signal 406 is the output of the hot spot creation process 404. The broadcast signal 406 is the signal or signals that are transmitted to the set top box 408. In some forms, the broadcast signal 406 may be a signal sent over the air to antennas located in a viewer, sent via a cable video network or satellite distribution system to a subscriber, recorded on a video cassette or optical disk for playback at the viewer's convenience, or any other method of distributing a video signal. In addition, the broadcast signal may be packetized and sent over the internet to a viewer's set top box, personal computer, or other appliance capable of receiving and displaying the broadcast video signal.

The broadcast signal 406 may have commands or triggers, such as hot spot triggers, embedded inside the video signal. In some embodiments, the triggers may be embedded into the vertical blanking interval (VBI) of the video signal. In other embodiments, the commands or triggers may be sent in a separate broadcast signal or may be downloaded separately through an Internet connection. In still other embodiments, the broadcast signal may include a video signal on a DVD and a separate file for commands and triggers located on the same DVD or a separate DVD. For the purposes of this specification, the term broadcast signal shall be construed to include any form or combination of signals, files, or other definitions of a video signal and the commands and triggers necessary to reproduce an enhanced video program.

The set top box 408 receives the broadcast signal 406 and may perform some manipulation of the video signal prior to displaying the resultant signal on the viewer's video display 410. The set top box 408 may be capable of understanding and executing embedded commands. The set top box may take the form of a separate box that accepts the broadcast video and prepares a signal for display on a common television. In other embodiments, the electronics for the set top box may be incorporated directly into the television. In still further embodiments, the set top box may be a personal computer or other internet appliance, capable of receiving the broadcast signal from conventional television distribution networks or directly over the internet.

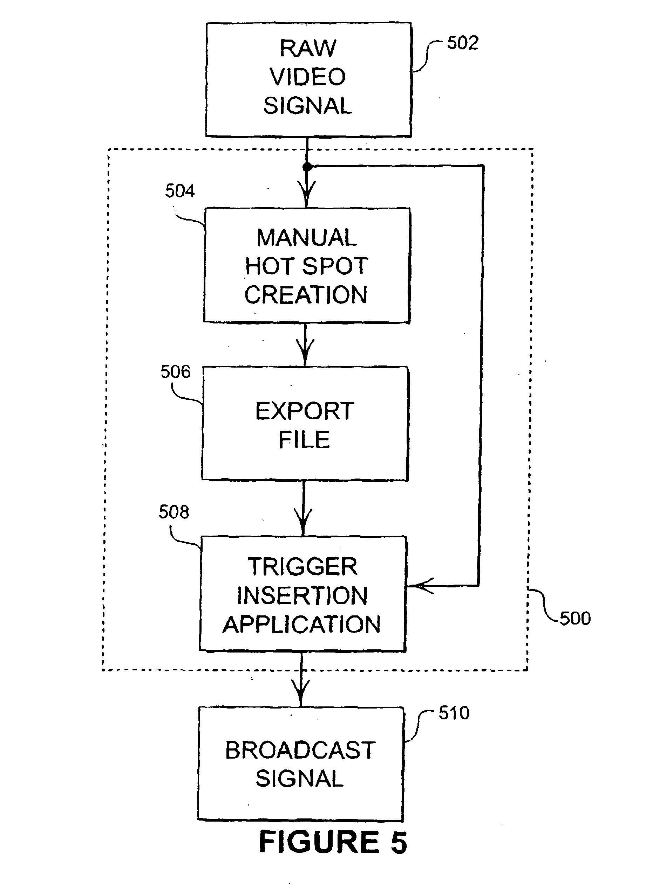

Figure 5 is a block diagram showing an embodiment 500 of the present invention wherein hot spots may be created manually. The method 500 is an embodiment of the hot spot creation process 404 shown in Figure 4. The raw video signal 502 is fed into the manual hot spot creation process 504, from which is generated an XML export file 506. The XML export file 506 is matched with the raw video signal 502 in the trigger insertion application 508 and encoded into the vertical blanking interval (VBI) of the raw video signal 502 with the encoder 510. The result of the process is a broadcast signal 512.

The raw video signal 502 is preferred to be pre-recorded, mixed, and edited. The video may include live action video, computer generated video, stock footage, or any other type of video. Due to the manual nature of the process 500, live video feeds may not be preferred.

The manual hot spot creation 504, an embodiment of which is described hereinafter, may be any method whereby a user may position a video signal and manually define a hot spot and its associated parameters. In general, the manual methods rely on the user to position the video to a certain point in the presentation, create the hot spot by drawing or positioning a shape onto the video screen and enter some parameters. The manual methods may be done using a computer application or a specialized video processing equipment adapted to perform such functions.

The result of the manual hot spot creation 504 may be an export file 506. The export file 506 may include all of the parameters associated with each hot spot. The export file 506 may be in XML or any other file structure as those skilled in the art may devise.

The trigger insertion application 508 merges the raw video signal 502 and the export file 506. The trigger insertion application 508 may create the triggers and commands necessary for a particular set top box to successfully decode and execute the hot spots. The trigger insertion application 508 may then package the triggers and commands with the raw video signal 502 to create the broadcast signal 510. The packaging may be to encode the triggers and commands into the VBI of the raw video signal. In another embodiment, the packaging may be to incorporate the triggers and commands into a data or command portion of the video signal. In other embodiments, the triggers and commands may be placed in a separate file that can be downloaded by a set top box. The trigger insertion application 508 will prepare and package the hot spot information in the formats necessary for a set top box to execute the hot spots and otherwise present the interactive video program.

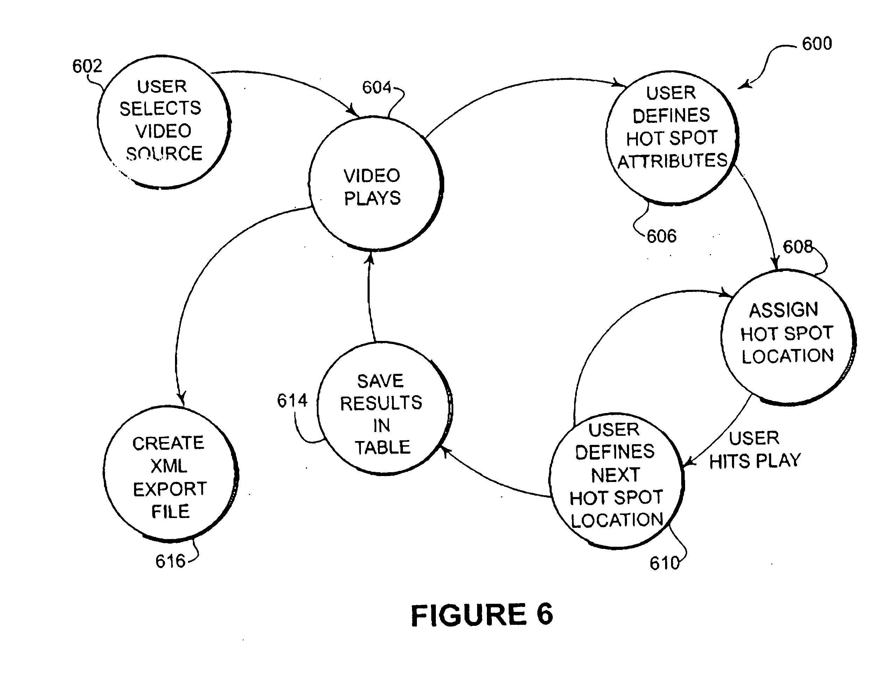

Figure 6 is a work flow diagram of a method 600 of creating hot spots that are dynamic. In block 602, a user selects a video source to create the dynamic hot spot. As the user positions and plays the video in block 604, the user may hit pause to stop the video at the frame where the hot spot will be created in block 606. The user will then create the hot spot and assign attributes in block 608. The user then moves the video forward to the next point for defining or destroying the hot spot in block 610. The user may elect to continue creating points for the hot spot or may select the current point to destroy the hot spot from the video signal. The results are saved in a table in block 614 and the user advances the video to either the next location for a new hot spot in block 606 or the user is finished creating hot spots in block 614, where an export XML file may be created.

The method 600 is directed at post processing a video signal and manually adding dynamic hot spots to the video. The basic process is to position the video to the frame where the first hot spot will be created, create the hot spot, move the video to another frame where the hot spot will be shown, add additional information to the hot spot, continue until the trajectory of the hot spot is defined, and save the positions and parameters of the hot spot. The information may define a trajectory that can be used to create movement of the hot spot on the display of the video signal, as will be discussed hereinafter.

The user selects a video source in block 602. The video source may be any type of program to which the user wishes to add hot spots. For example, the video may be a commercial advertisement for a product, a news program, a situation comedy, an educational documentary, or any other video signal.

The user positions and plays the video until the user finds a frame to start the hot spot in block 604. The user may jog the video forward and backward to select the exact frame where the hot spot will begin in the sequence.

The user then pauses the video at the start point of the hot spot to begin the process of assigning attributes to the hot spot in block 606. These attributes include the action associated with the hot spot, plus any additional attributes that the user may desire, including the color, width of border, whether it is flashing, the hot spot's latency, and other attributes as may be required. The action may be to display a web page on the screen, highlight an area on the screen, create a text box with a description of the object in the hot spot, send a message to a server, or any other action typically associated with a hot spot.

The user defines the hot spot location in block 608. The hot spot may be located by using a cursor-pointing device, such as a mouse, joystick, stylus, trackball, keyboard, or other input device to create a hot spot of a specific geometry. In general, the ATVEF specification allows for circular, rectangular, or n-sided polygons as standard hot spots. The hot spot may be created directly on the video image, allowing the user to position the hot spot exactly where the user wishes the hot spot to be. References made herein to the ATVEF specification are made for illustrative purposes only, and such references should not be construed as an endorsement, in any manner, of the ATVEF specification.

The user then forwards the video to a frame of the video where a second position of the hot spot will be located in block 610. The user may jog the video forward and backward to find the exact frame for the second position. The second position may be a point on a continuing trajectory or may be the point where the hot spot will be destroyed.

The user uses the same methodology as in block 606 to create a second or subsequent position of the hot spot. The second or subsequent position may have translated, rotated, enlarged, or otherwise changed from the first position.

The user may continue to add positions to define the hot spot trajectory and when finished, the results are saved in a table in block 614. The table is updated with each new hot spot as it is created until the user is done creating hot spots.

The positions of the hot spots will be used to interpolate hot spots for each of the frames of the video between the first position and the last position. If two points are defined, the interpolation is linear from the first position to the second. If three or more points are defined, a trajectory curve may be created for the interpolation. In addition to translating from one position to a second, the hot spot may also be scaled, rotated, or otherwise changed. In general, it may be easier to restrict the first and second hot spots to being of the same geometric shape. For example, if the first hot spot was rectangular, the second hot spot may be restricted to also being rectangular. However, it is well within the abilities of those skilled in the art to create routines to create methods for the transformation or morphing of a first geometry of hot spot to a second geometry.

An XML export file is created in block 616 and saved. The XML export file may contain all of the attributes for the hot spots and may be ready for integration into the video signal.

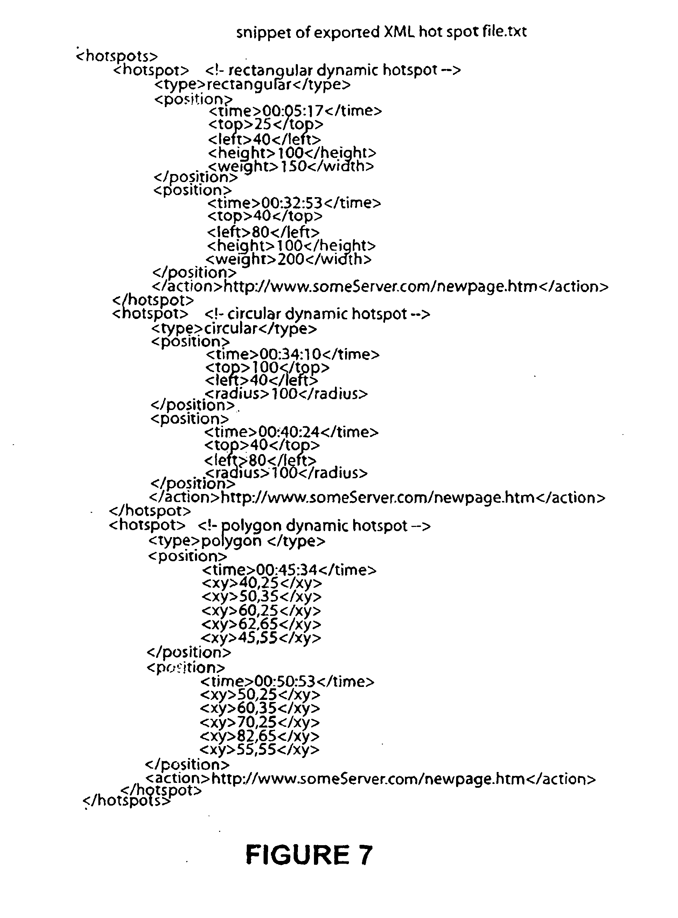

Figure 7 represents a snippet of an exported XML file with hot spot information.

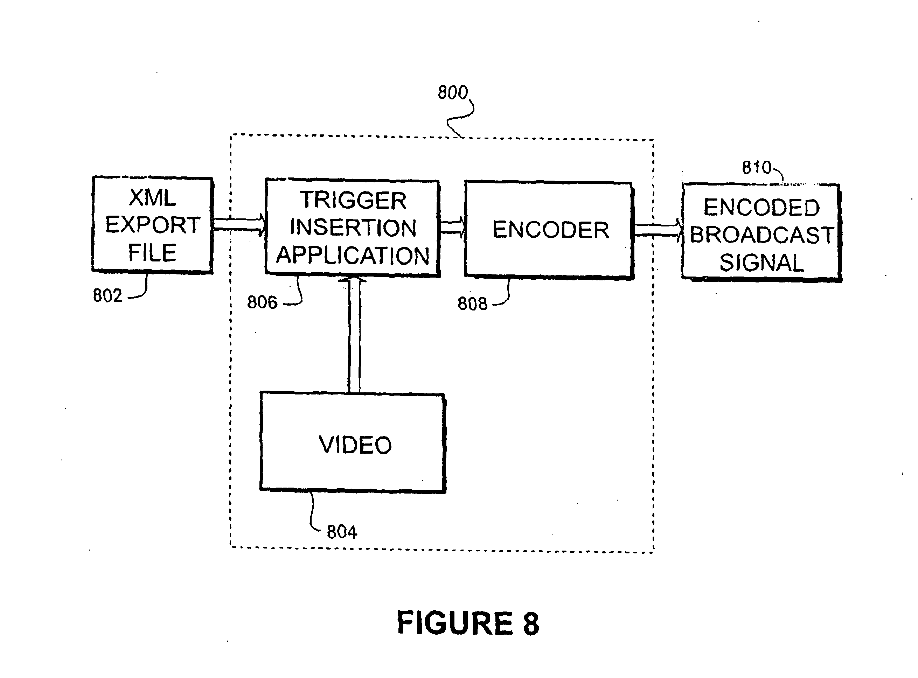

Figure 8 illustrates a method for embedding the hot spot information into a broadcast video signal, and represents an embodiment 800 of the trigger insertion application 508 of Figure 5. An XML export file 802 is merged with the video signal 804 in a trigger insertion application 806. The output of the trigger insertion application 806 is fed into an encoder 808 that produces the encoded broadcast signal 810.

The trigger insertion application 806 reads the XML export file 802, create the necessary trigger strings, and, at the appropriate frame time, merge the trigger with the incoming video stream by feeding both into the encoder 808. The trigger strings comprise the necessary information to instruct a receiver to create and execute a hot spot.

A trigger string for a dynamic hot spot may take the form of:

<http://www.someServer.com>[v:1][s:hotspot(Fa, Ta,La,Ha,Wa,Fb,Tb,Lb,Hb,Wb)][CC]

Where www.someServer.com is the link to which the hot spot will jump, Fa is the frame number of the first hot spot, Ta is the top coordinate for the first frame's hot spot, La is the left coordinate for the first frame's hot spot, Ha is the height of the first frame's hot spot, Wa is the width of the first frame's hot spot; Fb, Tb, Lb, Hb, Wb, are the corresponding frame number, top, left, height, and width of the second hot spot. The variable CC is a checksum that is used to validate the string.

The trigger string may be sent several frames prior to when the hot spot may be activated on the viewer's screen. The set top box may receive the trigger and prepare to execute the hot spot action when the appropriate time occurs.

The encoder 808 may be a vertical blanking encoder such as a Norpak TES-3 encoder. Such an encoder is capable of encoding the output of the trigger insertion application 806 into an NTSC compliant VBI. In other embodiments, the trigger and command information may be embedded into a different portion of the video signal, such as a data section of an MPEG-2 video. In still other embodiments, the trigger and command information may be prepared and saved as a separate file intended to be used by a set top box during the presentation of the video program.

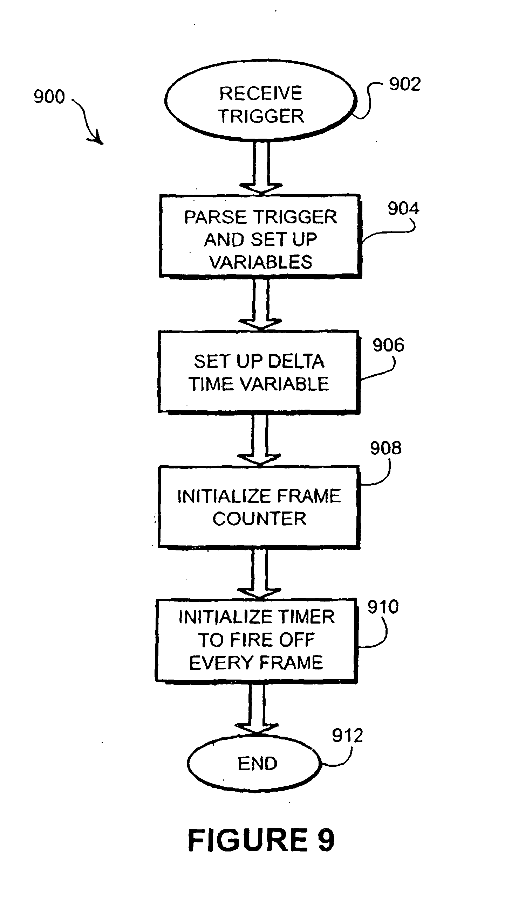

Figure 9 illustrates a flow chart of the sequence 900 for the set top box client to receive a trigger code. The trigger is received in step 902, parsed in step 904, and the delta time variable is initialized in step 906. A timer is initialized to fire off every frame, or every 33ms for a standard video frame length in step 910, then the process ends in step 912.

When the set top box receives a trigger command, the set top box parses the command in step 904. The parsing includes recalculating the checksum and comparing that to the transmitted checksum. If both checksums match, the trigger is assumed to be received correctly and is acted upon. If the checksums do not match, the trigger is ignored. Variables necessary to execute the trigger may be set up and initialized to certain values as required in this step.

The delta time variable may be set up in step 906. The delta time variable may be the total number of frames from the first frame where the hot spot is created to the last frame where the hot spot is destroyed.

The frame counter may be set up in step 908. The frame counter may be the number of frames from the first frame where the hot spot is created. The frame counter may be used to calculate the interpolated intermediate positions of the hot spot.

A timer is initialized and set to fire off every frame of the video in step 910. A typical video frame may be 33ms in length, however other frame lengths may also be used. The increment of the timer may be greater than one frame, depending on the application. In some applications where the set top box does not have the processing bandwidth to calculate the hot spot locations for each frame, the timer may be set to increment at more than one frame. The set top box may have an internal routine that monitors the amount of processing bandwidth and adjusts the timer increment upwards or downwards based on other activities that the set top box may perform.

The timer is active the entire time that the hot spot is active. After the timer is initialized, the process comes to an end in step 912.

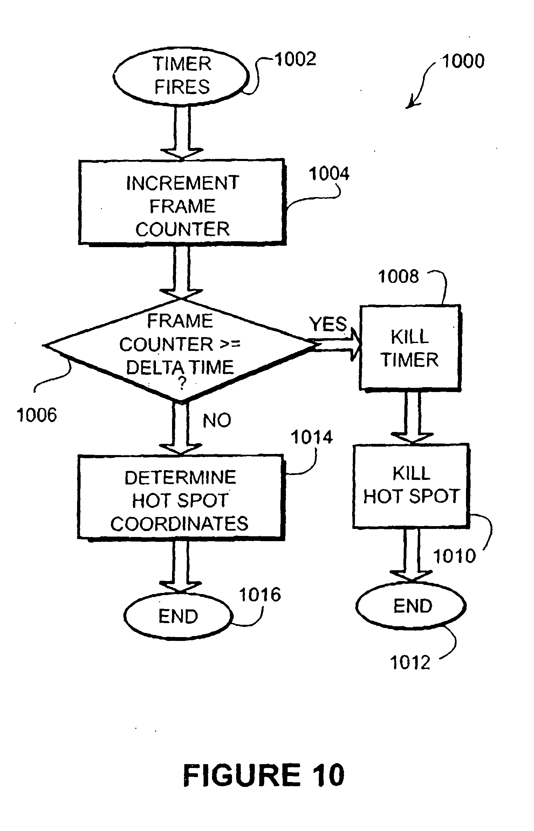

Figure 10 illustrates a flow chart of process 1000 for the events that happen when the timer of step 910 of Figure 9 is fired. The timer fires in step 1002 and the frame counter is incremented in step 1004, and the frame counter is compared to the delta time variable in step 1006. If the frame counter is equal to or greater than the delta time variable, the timer is killed in step 1008, the hot spot is killed in step 1010 and the process ends in step 1012. If the frame counter is less than the delta time variable, the hot spot coordinates are recalculated in step 1014 and the process ends in step 1016.

The process 1000 is a process whereby the hot spot coordinates are updated to make the hot spot appear to move across a video screen in synchronous movement with an object on the video. On each increment, such as a single frame, the position of the hot spot is recalculated and a new location for the hot spot displayed on the screen. The process 1000 also includes the mechanism whereby the timer created in step 910 of Figure 9 may be ended.

The timer fires in step 1002. The increment of the frame counter in step 1004 is the same increment as the timer is fired; otherwise the motion of the hot spot will not be in synchronous motion with the object that it is supposed to follow.

The frame counter is compared to the delta time in step 1006. The delta time is the total number of frames that the hot spot is supposed to be active. The frame counter is the current number of frames that the hot spot has been active. If the delta time is greater than the number of frames, the hot spot is still valid.

If the hot spot is no longer valid, the timer is killed in step 1008, the hot spot is killed in step 1010 and the process ends in step 1012. The hot spot may be killed in step 1010 by eliminating the hot spot from the HTML page that is displayed with the video image.

If the hot spot continues to be valid, the hot spot coordinates are recalculated in step 1014. The methods of determining the hot spot coordinates are varied. For dynamic hot spots that appear to move across the screen, the motion of the hot spot may be estimated as a straight line or a curve. In the case of a straight line, two points may determine the hot spot trajectory: generally a start point and end point. In the case of a curved line, several points, generally three or more, that define a start point, an end point and one or more points in between.

For the case of a straight line motion of a rectangular, ATVEF compliant hot spot, the coordinates for the intermediate positions may be calculated by the following equations:

$$Tc = ((Tb-Ta)/(Fb-Fa)) * (cfn-Fa) + Ta$$

$$Lc=((Lb-La)/(Fb-Fa))*(cfn-Fa)+La$$

$$Hc=((Hb-Ha)/(Fb-Fa))*(cfn-Fa)+Ha$$

$$Wc=((Wb-Wa)/(Fb-Fa))*(cfn-Fa)+Wa$$

Where Tc is the current Top coordinate, Lc is the current Left coordinate, Hc is the current Height value, We is the current Width value, cfn is the current frame number, Fb is the last frame number, and Fa is the first frame number. For the case of a curved trajectory, similar equations based on the calculated curve constants may be created and used to determine the intermediate coordinates. Those skilled in the art may create other methods for calculating the intermediate values of a hot spot coordinate.

The calculated values of the hot spot locations may be inserted into the location variable for the hot spot each time the values are recalculated and thus the position of.the hot spot will appear to move across the screen as the viewer watches the video image.

The set top box may have several different modes for displaying dynamic hot spots, all of which may be manipulated and changed by the viewer to enhance the viewing experience. Among the modes for displaying dynamic hot spots include: having no hot spot borders shown, having borders shown in a certain manner, having only a selected group of borders shown, showing the borders on mouseOver, displaying text or graphics on mouseOver, or other modes as may be desired.

A mode that the viewer may select is to have the set top box remove all hot spot borders from the screen. In one embodiment of the present mode, the hot spots may be made totally inactive, and the viewer would thereby ignore the interactive video elements. In another embodiment of the present mode, the hot spots may be active, but no border or other interfering graphics would be present on the screen. In such an embodiment, the viewer would then need to find the interactive content on the screen. For example, a small icon in the corner of the screen may indicate the presence of interactive content. It would then be incumbent on the viewer to move the cursor on the screen to find the interactive hot spot and execute the associated action. Such a mode may be desirable in the case of a sporting event with many interactive elements. In such a case, the viewer who has watched previous events maybe familiar with the style, type and location of the interactive content, so the viewer does not need to have any hot spot borders or other graphics cluttering the screen and preventing the viewer from fully enjoying the video experience.

The viewer may select the modes for the display of hot spots and other interactive elements. The modes selected by the viewer may be set for a specific broadcast, for each instance of a program such as a football contest, for a certain broadcast channel, for a certain period of time, or for all programs. All of the modes may be processed in the set top box, therefore each set top box may be configured independently. The set top box may store a particular viewer's settings separate from a second viewer's settings. In this manner, each viewer may configure their own preferences into the set top box and have the set top box configuration readily changed over to a new configuration when different viewers use the television.

Hot spots may be classified into certain groups when the hot spots are created. Individual groups of hot spots may be selectively displayed. For example if a viewer is watching a football game, and the viewer was a fan of a particular player, the viewer may elect to have the hot spots associated with that particular player displayed.

In short review, this writing has disclosed a method for defining, transmitting, creating, and displaying a dynamic hot spot on a video stream. Two or more trajectory points can define a dynamic hot spot. The trajectory points may be used to interpolate the position of the hot spot during the course of its movement.

The foregoing description has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated.

**Claims**

1. A method for generating a dynamic hot spot for an interactive video program comprising:

   defining a trajectory (314), said trajectory (314) having at least a start point (304) and an end point (312), said start point (304) being associated with a first frame identifier (1) of said video program (302), said end point (312) being associated with a second frame identifier (400) of said video program, wherein said start point (304) and said end point (312) are separated by one or more intermediate frames (200), the trajectory (314) comprises the location of the hot spot (202) for at least said start point (304) and said end point (312), and the trajectory (314) includes parameters to define an equation for calculating the location of the hot spot (202) for the one or more intermediate frames (200); defining an action associated with said hot spot (202);

defining attributes for said hot spot (202) including an action associated with said hot spot;and embedding a trigger into said interactive video program comprising said trajectory (314), said action, and said attributes.

2. The method of claim 1 wherein said trigger is embedded into the vertical blanking interval of a video signal.

3. The method of claim 1 wherein said interactive video program comprises MPEG video.

4. A method for displaying a dynamic hot spot (202) on a video image comprising:

providing a set top box (408) capable of receiving triggers embedded in said video image, said triggers comprising hot spot definitions;
receiving a hot spot definition by said set top box (408), said definition comprising at least a start point (304) and an end point (312) which indicate a starting position and an ending position on said screen, and at least one frame identifier, wherein said start point (304) and said end point (312) are separated by one or more intermediate frames (200), said hot spot definition further comprising parameters defining an equation for a trajectory;
creating a hot spot (202) on said start point (304) based on said hot spot definition;
displaying said hot spot (202) on said start point (304);
determining a trajectory (314) based on the parameters comprised in said hot spot definition;
calculating using said determined trajectory intermediate positions for said hot spot (202) for intermediate frames (200) of said video between said start point (304) and said end point (312); and
displaying said hot spot (202) on said video image for frames of said video between said start point (304) and said end point (312).

5. The method of claim 4 wherein said trigger is embedded into the vertical blanking interval of a video signal.

6. The method of claim 4 wherein said video image comprises MPEG video.

7. A method of creating and displaying a moving hot spot on a video signal comprising:

defining a first trajectory point (304) on a first frame (1) of a video signal; defining at least one more trajectory point (312) for a subsequent motion of said hot spot (202) on said video signal (302) on at least one subsequent frame (400) of said video signal, said subsequent frame (400) having at least one intermediate frame (200) between said first frame (1) and said subsequent frame (400);
creating parameters to define an equation for a trajectory (314) of said hot spot (202);
creating a trigger comprising said parameters;
transmitting said trigger to a set top box (408);
creating said hot spot (202) with said set top box (408);
calculating an intermediate position (308) of said hot spot (202) for said at least one intermediate frame (200) using said parameters; and
displaying said hot spot (202) on a video display (410).

8. The method of claim 7 wherein said trigger is embedded into the vertical blanking interval of said video signal.

9. The method of claim 7 wherein said video signal comprises MPEG video.

10. A system for interactive video comprising:

an editing system adapted to:

define a first trajectory point (304) on a first frame (1) of a video signal (302) for motion of a hot spot (202);
define at least one more trajectory point (312) for a subsequent motion of said hot spot (202) on said video signal (302) on at least one subsequent frame (400) in said video signal (302), said subsequent frame (400) having at least one intermediate frame (200) between said first frame (1) and said subsequent frame (400);
create parameters to define an equation for said trajectory (314) of said hot spot (202);
create a trigger comprising said parameters; and
insert said trigger into said video signal (302); and,
a set top box (408) adapted to receive said trigger, create said hot spot (202), calculate at least one intermediate position (308) of said hot spot (202) for said intermediate frames (200) using said parameters, and display said hot spot on a video display (410).

11. The system of claim 10 wherein said trigger is embedded into the vertical blanking interval of said video signal.

**12.** The system of claim 10 wherein said video signal comprises MPEG video.

**Patentansprüche**

**1.** Verfahren zum Erzeugen eines dynamischen Hot Spots für ein interaktives Videoprogramm, umfassend:

Definieren einer Bewegungsbahn (314), wobei diese Bewegungsbahn (314) mindestens einen Anfangspunkt (304) und einen Endpunkt (312) aufweist, wobei dieser Anfangspunkt (304) mit einer ersten Rahmenkennung (1) des Videoprogramms (302) verbunden ist, wobei der Endpunkt (312) mit einer zweiten Rahmenkennung (400) des Videoprogramms verbunden ist, wobei der Anfangspunkt (304) und der Endpunkt (312) durch einen oder mehrere Zwischenrahmen (200) getrennt sind, die Bewegungsbahn (314) den Standort des Hot Spots (202) für mindestens den Anfangspunkt (304) und den Endpunkt (312) umfaßt und die Bewegungsbahn (314) Parameter zum Definieren einer Gleichung zum Berechnen des Standorts des Hot Spots (202) für den einen oder die mehreren Zwischenrahmen (200) einschließt;
Definieren einer mit dem Hot Spot (202) verbundenen Handlung;
Definieren von Attributen für den Hot Spot (202) einschließlich einer mit dem Hot Spot verbundenen Handlung; und
Einbetten eines Triggers in das interaktive Videoprogramm, umfassend die Bewegungsbahn (314), die Handlung und die Attribute.

**2.** Verfahren nach Anspruch 1, wobei dieser Trigger in die Bildaustastlücke eines Videosignals eingebettet ist.

**3.** Verfahren nach Anspruch 1, wobei das interaktive Videoprogramm MPEG-Video umfasst.

**4.** Verfahren zum Anzeigen eines dynamischen Hot Spots (202) auf einem Videobild, umfassend:

Bereitstellen einer Set-Top-Box (408), fähig zum Empfangen von in dem Videobild eingebetteten Triggern, wobei diese Trigger Hot Spot-Definitionen umfassen;
Empfangen einer Hot Spot-Definition durch die Set-Top-Box (408), wobei diese Definition mindestens einen Anfangspunkt (304) und einen Endpunkt (312) umfasst, die eine Anfangsstelle und eine Endstelle auf dem Bildschirm anzeigen, und mindestens eine Rahmenkennung, wobei der Anfangspunkt (304) und der Endpunkt (312) durch einen oder mehrere Zwischenrahmen (200) getrennt sind, wobei diese Hot Spot-Definition weiterhin eine Gleichung für eine Bewegungsbahn definierende Parameter umfasst;
Erzeugen eines Hot Spots (202) auf dem Anfangspunkt (304) auf Grundlage der Hot Spot-Definition;
Anzeigen des Hot Spots (202) auf dem Anfangspunkt (304);
Bestimmen einer auf den in der Hot Spot-Definition enthaltenen Parametern basierenden Bewegungsbahn (314);
Berechnen unter Verwendung der bestimmten Bewegungsbahn von Zwischenstellen für den Hot Spot (202) für Zwischenrahmen (200) des Videos zwischen dem Anfangspunkt (304) und dem Endpunkt (312); und
Anzeigen des Hot Spots (202) auf dem Videobild für Rahmen des Videos zwischen dem Anfangspunkt (304) und dem Endpunkt (312).

**5.** Verfahren nach Anspruch 4, wobei der Trigger in die Bildaustastlücke eines Videosignals eingebettet ist.

**6.** Verfahren nach Anspruch 4, wobei das Videobild MPEG-Video umfasst.

**7.** Verfahren zum Erzeugen und Anzeigen eines beweglichen Hot Spots auf einem Videosignal, umfassend:

Definieren eines ersten Bewegungsbahnpunkts (304) auf einem ersten Rahmen (1) eines Videosignals;
Definieren mindestens eines weiteren Bewegungsbahnpunkts (312) für eine nachfolgende Bewegung des Hot Spots (202) auf dem Videosignal (302) auf mindestens einem nachfolgenden Rahmen (400) des Videosignals, wobei der nachfolgende Rahmen (400) mindestens einen Zwischenrahmen (200) zwischen dem ersten Rahmen (1) und dem nachfolgenden Rahmen (400) aufweist;
Erzeugen von Parametern zum Definieren einer Gleichung für eine Bewegungsbahn (314) des Hot Spots (202);
Erzeugen eines Triggers mit diesen Parametern;
Übertragen des Triggers zu einer Set-Top-Box (408);
Erzeugen des Hot Spots (202) mit der Set-Top-Box (408);
Berechnen einer Zwischenstellung (308) des Hot Spots (202) für den mindestens einen Zwischenrahmen (200) unter Verwendung der Parameter; und
Anzeigen des Hot Spots (202) auf einer Videoanzeige (410).

**8.** Verfahren nach Anspruch 7, wobei dieser Trigger in die Bildaustastlücke des Videosignals eingebettet ist.

**9.** Verfahren nach Anspruch 7, wobei das Videosignal MPEG-Video umfasst.

**10.** System für interaktives Video, umfassend:

ein Schnittbearbeitungssystem, geeignet zum Definieren eines ersten Bewegungsbahnpunkts (304) auf einem ersten Rahmen (1) eines Videosignals (302) zur Bewegung eines Hot Spots (202);
Definieren mindestens eines weiteren Bewegungsbahnpunkts (312) für eine nachfolgende Bewegung des Hot Spots (202) auf dem Videosignal (302) auf mindestens einem nachfolgenden Rahmen (400) in dem Videosignal (302), wobei der nachfolgende Rahmen (400) mindestens einen Zwischenrahmen (200) zwischen dem ersten Rahmen (1) und dem nachfolgenden Rahmen (400) aufweist;
Erzeugen von Parametern zum Definieren einer Gleichung für die Bewegungsbahn (314) des Hot Spots (202);
Erzeugen eines diese Parameter umfassenden Triggers; und
Einfügen des Triggers in das Videosignal (302); und
eine Set-Top-Box (408), geeignet zum Empfangen des Triggers, Erzeugen des Hot Spots (202), Berechnen mindestens einer Zwischenstelle (308) des Hot Spots (202) für die Zwischenrahmen (200) unter Verwendung der Parameter, und Anzeigen des Hot Spots auf einer Videoanzeige (410).

**11.** System nach Anspruch 10, wobei der Trigger in die Bildaustastlücke des Videosignals eingebettet ist.

**12.** System nach Anspruch 10, wobei das Videosignal MPEG-Video umfasst.

## Revendications

**1.** Procédé de génération d'une zone interactive dynamique pour un programme vidéo interactif comprenant:

la définition d'une trajectoire (314), ladite trajectoire (314) ayant au moins un point de départ (304) et un point d'arrivée (312), ledit point de départ (304) étant associé à un premier identifiant de trame (1) dudit programme vidéo (302), ledit point d'arrivée (312) étant associé à un second identifiant de trame (400) dudit programme vidéo,
dans lequel ledit point de départ (304) et ledit point d'arrivée (312) sont séparés par une ou plusieurs trame(s) intermédiaire(s) (200), la trajectoire (314) comprend l'emplacement de la zone interactive (202) pour ledit point de départ (304) et ledit point d'arrivée (312) au moins, et la trajectoire (314) comprend des paramètres qui définissent une équation qui permet de calculer l'emplacement de la zone interactive (202) pour la ou les trame(s) intermédiaire(s) (200);
la définition d'une action associée à ladite zone interactive (202);
la définition d'attributs pour ladite zone interactive (202) comprenant une action associée à ladite zone interactive; et
l'intégration d'une balise audit programme vidéo interactif comprenant ladite trajectoire (314), ladite action, et lesdits attributs.

**2.** Procédé selon la revendication 1, dans lequel ladite balise est intégrée à l'intervalle de suppression verticale d'un signal vidéo.

**3.** Procédé selon la revendication 1, dans lequel ledit programme vidéo interactif comprend une vidéo MPEG.

**4.** Procédé d'affichage d'une zone interactive dynamique (202) sur une image vidéo comprenant:

l'installation d'un boîtier décodeur (408) capable de recevoir les balises intégrées à ladite image vidéo, lesdites balises comprenant des définitions de zones interactives;
la réception d'une définition de zone interactive par ledit boîtier décodeur (408), ladite définition comprenant au moins un point de départ (304) et un point d'arrivée (312) qui indiquent une position de départ et une position de fin sur ledit écran, et au moins un identifiant de trame, dans lequel ledit point de départ (304) et ledit point d'arrivée (312) sont séparés par une ou plusieurs trame(s) intermédiaire(s) (200), ladite définition de zone interactive comprenant en outre des paramètres qui définissent une équation pour une trajectoire;
la création d'une zone interactive (202) sur ledit point de départ (304) sur la base de ladite définition de zone interactive;
l'affichage de ladite zone interactive (202) sur ledit point de départ (304);
la détermination d'une trajectoire (314) sur la base des paramètres compris dans ladite définition de zone interactive;
le calcul, à l'aide de ladite trajectoire déterminée, de positions intermédiaires pour ladite zone interactive (202), pour des trames intermédiaires (200) de ladite vidéo entre ledit point de départ (304) et ledit point d'arrivée (312); et

l'affichage de ladite zone interactive (202) sur ladite image vidéo pour les trames de ladite vidéo entre ledit point de départ (304) et ledit point d'arrivée (312).

5. Procédé selon la revendication 4, dans lequel ladite balise est intégrée à l'intervalle de suppression verticale d'un signal vidéo.

6. Procédé selon la revendication 4, dans lequel ladite image vidéo comprend une vidéo MPEG.

7. Procédé de création et d'affichage d'une zone interactive en mouvement sur un signal vidéo comprenant:

la définition d'un premier point de trajectoire (304) sur une première trame (1) d'un signal vidéo;

la définition d'au moins un point de trajectoire supplémentaire (312) pour un mouvement ultérieur de ladite zone interactive (202) sur ledit signal vidéo (302) sur au moins une trame ultérieure (400) dudit signal vidéo, ladite trame ultérieure (400) ayant au moins une trame intermédiaire (200) entre ladite première trame (1) et ladite trame ultérieure (400);

la création de paramètres qui permettent de définir une équation pour une trajectoire (314) de ladite zone interactive (202);

la création d'une balise comprenant lesdits paramètres;

la transmission de ladite balise à un boîtier décodeur (408);

la création de ladite zone interactive (202) avec ledit boîtier décodeur (408);

le calcul d'une position intermédiaire (308) de ladite zone interactive (202) pour ladite trame intermédiaire (200) au moins, à l'aide desdits paramètres; et

l'affichage de ladite zone interactive (202) sur un afficheur vidéo (410).

8. Procédé selon la revendication 7, dans lequel ladite balise est intégrée à l'intervalle de suppression verticale dudit signal vidéo.

9. Procédé selon la revendication 7, dans lequel ledit signal vidéo comprend une vidéo MPEG.

10. Système vidéo interactif comprenant:

un système d'édition conçu pour:

définir un premier point de trajectoire (304) sur une première trame (1) d'un signal vidéo (302) pour le mouvement d'une zone interactive (202);

définir au moins un point de trajectoire supplémentaire (312) pour un mouvement ultérieur de ladite zone interactive (202) sur ledit signal vidéo (302) sur au moins une trame ultérieure (400) dudit signal vidéo (302), ladite trame ultérieure (400) ayant au moins une trame intermédiaire (200) entre ladite première trame (1) et ladite trame ultérieure (400);

créer des paramètres qui permettent de définir une équation pour ladite trajectoire (314) de ladite zone interactive (202);

créer une balise comprenant lesdits paramètres; et

insérer ladite balise audit signal vidéo (302); et

un boîtier décodeur (408) conçu pour recevoir ladite balise, créer ladite zone interactive (202), calculer au moins une position intermédiaire (308) de ladite zone interactive (202) pour lesdites trames intermédiaires (200) à l'aide desdits paramètres, et afficher ladite zone interactive sur un afficheur vidéo (410).

11. Système selon la revendication 10, dans lequel ladite balise est intégrée à l'intervalle de suppression verticale dudit signal vidéo.

12. Système selon la revendication 10, dans lequel ledit signal vidéo comprend une vidéo MPEG.

FIRST GENTLEMAN
102

TIRE
106

ALL TRACK TECH

104
SECOND GENTLEMAN

100

**FIGURE 1**

EP 1 483 911 B1

FIGURE 2

304

HOT SPOT LOCATION$^{(x,y)}$ 25, 40
HEIGHT, WIDTH   100, 150

302

FRAME 1

# FIGURE 3A

308

$^{(x,y)}$ 300, 60
HEIGHT, WIDTH 100, 150

306

FRAME 200

# FIGURE 3B

314          312

$^{(x,y)}$ 400, 400
HEIGHT, WIDTH 100, 150

310

FRAME 400

# FIGURE 3C

RAW
VIDEO
SIGNAL — 402

HOT SPOT
CREATION
PROCESS — 404

400

BROADCAST
SIGNAL — 406

SET TOP
BOX — 408

VIDEO
DISPLAY — 410

## FIGURE 4

RAW
VIDEO
SIGNAL — 502

MANUAL
HOT SPOT
CREATION — 504

EXPORT
FILE — 506

TRIGGER
INSERTION
APPLICATION — 508

— 500

BROADCAST
SIGNAL — 510

**FIGURE 5**

**FIGURE 6**

EP 1 483 911 B1

snippet of exported XML hot spot file.txt

```
<hotspots>
      <hotspot>    <!- rectangular dynamic hotspot -->
            <type>rectangular</type>
            <position>
                    <time>00:05:17</time>
                    <top>25</top>
                    <left>40</left>
                    <height>100</height>
                    <weight>150</width>
            </position>
            <position>
                    <time>00:32:53</time>
                    <top>40</top>
                    <left>80</left>
                    <height>100</height>
                    <weight>200</width>
            </position>
            </action>http://www.someServer.com/newpage.htm</action>
      </hotspot>
      <hotspot>    <!- circular dynamic hotspot -->
            <type>circular</type>
            <position>
                    <time>00:34:10</time>
                    <top>100</top>
                    <left>40</left>
                    <radius>100</radius>
            </position>
            <position>
                    <time>00:40:24</time>
                    <top>40</top>
                    <left>80</left>
                    <radius>100</radius>
            </position>
            </action>http://www.someServer.com/newpage.htm</action>
      </hotspot>
      <hotspot>    <!- polygon dynamic hotspot -->
            <type>polygon </type>
            <position>
                    <time>00:45:34</time>
                    <xy>40,25</xy>
                    <xy>50,35</xy>
                    <xy>60,25</xy>
                    <xy>62,65</xy>
                    <xy>45,55</xy>
            </position>
            <position>
                    <time>00:50:53</time>
                    <xy>50,25</xy>
                    <xy>60,35</xy>
                    <xy>70,25</xy>
                    <xy>82,65</xy>
                    <xy>55,55</xy>
            </position>
            <action>http://www.someServer.com/newpage.htm</action>
      </hotspot>
</hotspots>
```

# FIGURE 7

800

810

| XML EXPORT FILE | → | TRIGGER INSERTION APPLICATION | → | ENCODER | → | ENCODED BROADCAST SIGNAL |

802

806

808

↑

VIDEO

804

**FIGURE 8**

900

902
RECEIVE
TRIGGER

904
PARSE TRIGGER
AND SET UP
VARIABLES

906
SET UP DELTA
TIME VARIABLE

908
INITIALIZE FRAME
COUNTER

910
INITIALIZE TIMER
TO FIRE OFF
EVERY FRAME

912
END

# FIGURE 9

FIGURE 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020087986 A1, Steven O. Markel
- US 20020126990 A1, Gary Rasmussen
- US 20030028873 A1, Thomas Lemmons
- US 5708845 A
- WO 0118676 A1
- US 5727141 A